# EUROPÄISCHE PATENTANMELDUNG

(11) **EP 0 705 658 A1**
(43) Veröffentlichungstag der Anmeldung: **10.04.1996**
(21) Anmeldenummer: 95113600.1
(22) Anmeldetag: 30.08.1995
(51) Int. Cl.: B23Q 1/00, B21D 28/34

(54) **Vorrichtung zum Bearbeiten von Werkstücken**

(30) Priorität: 04.10.1994 DE 4435247
(71) Anmelder: BALTEC MASCHINENBAU AG, CH-8330 Pfäffikon (CH)
(72) Erfinder: Reifler, Fredy, CH-8820 Wädenswil-Zürich (CH)
(74) Vertreter: Weiss, Peter, Dr. rer. nat.

(57) **Zusammenfassung**

Bei einer Vorrichtung zum Bearbeiten von Werkstücken mit einem Werkzeug (5, 18, 20), das an einer Aufspannplatte (4, 8) festgelegt ist, soll zwischen der Aufspannplatte (4, 8) und dem Werkzeug (5, 18, 20) ein Adapter (14) angeordnet sein.

## Beschreibung

Die Erfindung betrifft eine Vorrichtung zum Bearbeiten von Werkstücken mit einem Werkzeug, das an einer Aufspannplatte festgelegt ist.

Derartige Vorrichtungen sind in vielfältiger Form und Ausführung bekannt. Insbesondere handelt es sich dabei um Präzisionsumformmaschinen zum Nieten, Stanzen, Nibbeln und Ziehen von Werkstücken.

Eine derartige Vorrichtung ist beispielsweise aus der CH-PS 627 965 als Stanzmaschine bekannt. Wesentlich bei dieser Vorrichtung ist das hochpräzise Werkzeug-, Wechsel-, Zentrier-, Spann- und Führungssystem. Dieses erlaubt durch die krallenartige Ausgestaltung von entsprechenden Halterungen in bzw. an den Aufspannplatten ein schnelles Auswechseln der Werkzeuge.

Der vorliegenden Erfindung liegt die Aufgabe zugrunde, dieses eben genannte Werkzeug-, Wechsel-, Zentrier-, Spann- und Führungssystem erheblich zu verbessern und flexibler auszugstalten.

Zur Lösung dieser Aufgabe führt, daß zwischen Aufspannplatte und Werkzeug ein Adapter angeordnet ist.

Dieser Adapter hat den erheblichen Vorteil, daß über ihn eine Vielzahl von Werkzeugen mit der entsprechenden Aufspannplatte gekoppelt werden kann. Es wird nicht mehr jedes Werkzeug bzw. Werkzeugteil direkt mit der ihm zugeordneten Aufspannplatte verbunden, sondern es genügt die Zuordnung von nur einem bzw. von nur wenigen Adaptern zu einer erfindungsgemässen Vorrichtung, wobei diese Adapter dann so ausgestaltet sind, dass eine Vielzahl von Werkzeugen mit ihnen verbunden werden kann.

Dies gilt selbstverständlich auch für bereits im Gebrauch befindliche Werkzeuge, wobei die Adapter dann so ausgestaltet sind, dass entsprechende Bohrungen od. dgl. zum Festlegen von bereits vorhandenen Werkzeugen vorgesehen sind.

Bevorzugt weist der Adapter zumindest eine Platte auf, deren Breite einer Breite eines Kanals bzw. einer Rinne in der Aufspannplatte entspricht. Der Kanal und die Rinne sind bevorzugt T-förmig ausgeformt, so dass hier Hinterschneidungen entstehen, in welche die Platte eingeschoben werden kann. Die Festlegung der Platte erfolgt dann bevorzugt mit Klemmelementen, wie sie in der CH-PS 627 965 beschrieben sind. Allerdings soll hierauf die Erfindung nicht beschränkt sein, die Platten können auch auf andere beliebige Weise festgelegt werden.

Auch der Adapter selbst kann eine vielfältige Ausgestaltung besitzen. Neben der eben erwähnten Platte, die sich insbesondere zur Festlegung mittels der in der CH-PS 627 965 genannten Klemmelemente anbietet, können noch Blöcke oder andere Versteifungen vorgesehen sein, die der besseren Halterung des Werkzeuges dienen. Hier ist dem erfinderischen Gedanken keine Grenze gesetzt.

Bevorzugt weist der Adapter bereits eine Mehrzahl von Bohrungen zum Festlegen der Werkzeuge auf. Hierbei können die Bohrungen nur auf ein bestimmtes oder bereits auf eine Mehrzahl von Werkzeugen abgestimmt sein.

Der Zentrierung des Adapters in der jeweiligen Aufspannplatte dient eine Zentrierbohrung, in welche bevorzugt in Gebrauchslage ein Zentrierstift einfährt. Dieser Zentrierstift kann beispielsweise federgelagert oder auch pneumatisch, hydraulisch od. dgl. betätigbar sein. Er dient dazu, den Adapter exakt zu zentrieren, so dass im Anschluss daran ein höchstpräzises Bearbeiten von Werkstücken möglich ist.

Diesem höchstpräzisen Bearbeiten der Werkstücke dient auch ein vorheriges exaktes Schleifen der Adapter, vor allem an den Flächen, die als Bezugsflächen beim Festlegen dienen. Hierdurch werden Genauigkeiten der Bearbeitung von Werkstücken erreicht, die im µm-Bereich und Bruchteilen davon liegen.

Von der Erfindung wird umfasst, dass beispielsweise nur ein Werkzeug über einen Adapter mit einer entsprechenden Aufspannplatte verbunden ist. In der Regel werden jedoch zwei zusammenwirkende Werkzeuge, d.h. ein Ober- und ein Unterwerkzeug benutzt, wobei bevorzugt jedes dieser Werkzeugteile mit seiner Aufspannplatte über einen oben beschriebenen Adapter verbunden ist. Hierdurch wird nicht nur ein schnelles Wechseln der Werkzeuge ermöglicht, sondern die Werkzeuge selbst können an dem Adapter schnell ausgetauscht werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Frontansicht einer erfindungsgemässen Vorrichtung zum Bearbeiten von Werkstücken;
Figur 2 eine vergrössert dargestellte perspektivische Ansicht eines Ausschnitts aus einem Werkzeugbereich der Vorrichtung gemäss Figur 1 mit eingesetzten Werkzeugen;
Figur 3 eine perspektivische Ansicht eines Ober- und Unterwerkzeuges;
Figur 4 eine perspektivische Ansicht eines weiteren Ausführungsbeispiel eines Ober- und Unterwerkzeuges;
Figur 5 eine perspektivische Ansicht eines weiteren Ausführungsbeispiels eines Unterwerkzeuges;
Figur 6 eine Unteransicht des Unterwerkzeuges gemäss Figur 5;
Figur 7 einen Querschnitt durch das Unterwerkzeug gemäss Figur 6 in Gebrauchslage in einer Aufspannplatte;
Figur 8 eine perspektivische Ansicht eines Oberwerkzeuges.

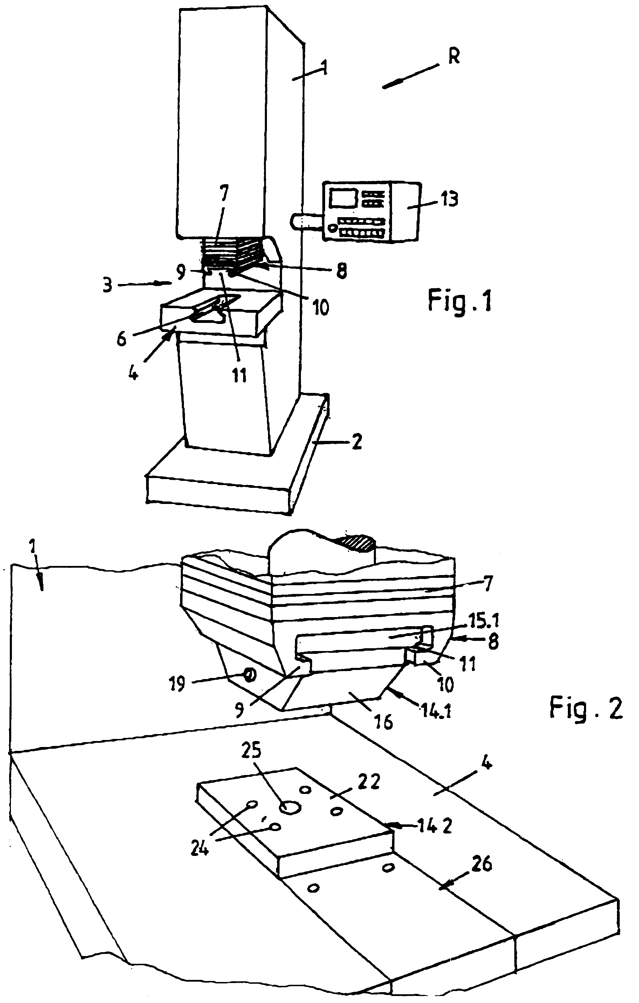

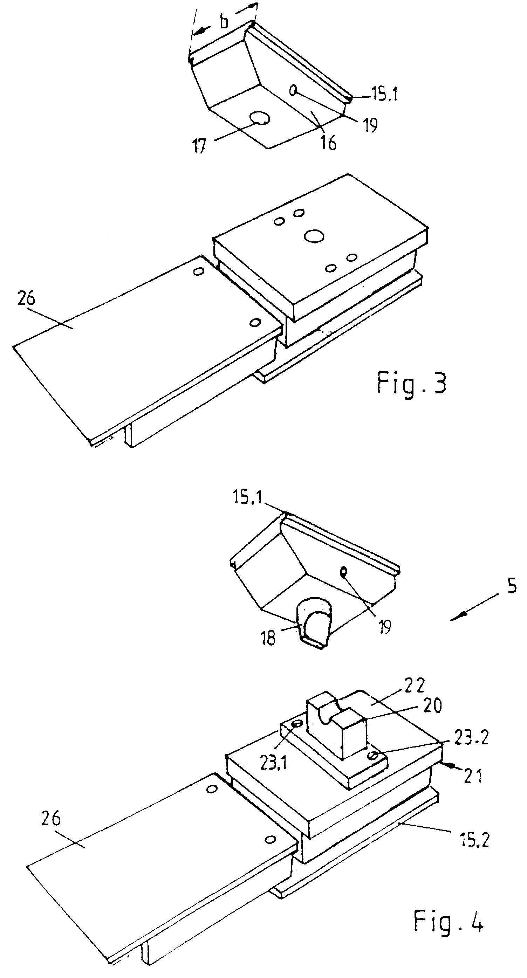

Gemäss Figur 1 weist eine Vorrichtung R zum Bearbeiten von nicht näher gezeigten Werkstücken ein Maschinengehäuses 1 auf, welches über eine Grundplatte 2 einem Hallenboden od. dgl. aufsitzt. In einem Ausschnitt 3 aus dem Maschinengehäuse 1 befindet sich eine untere Aufspannplatte 4 zur Aufnahme eines Unterwerkzeuges, welches zusammen mit einem Oberwerkzeug ein Werkzeug 5 bildet, wobei Beispiele für solche Werkzeuge 5 in Figur 4 gezeigt sind. In Figur 1 ist lediglich ein T-förmiger Kanal 6 zur Aufnahme des Unterwerkzeuges angedeutet, wie dies weiter unten beschrieben wird.

Gegenüber von dem Kanal 6 befindet sich an einem in Figur 2 gezeigten Stössel, der von einem Faltenband 7 umgeben ist, eine weitere Aufspannplatte 8, welche durch zwei parallel verlaufende Krallenstreifen 9 und 10 eine ebenfalls T-förmige Rinne 11 zur Aufnahme des Oberwerkzeuges ausbildet.

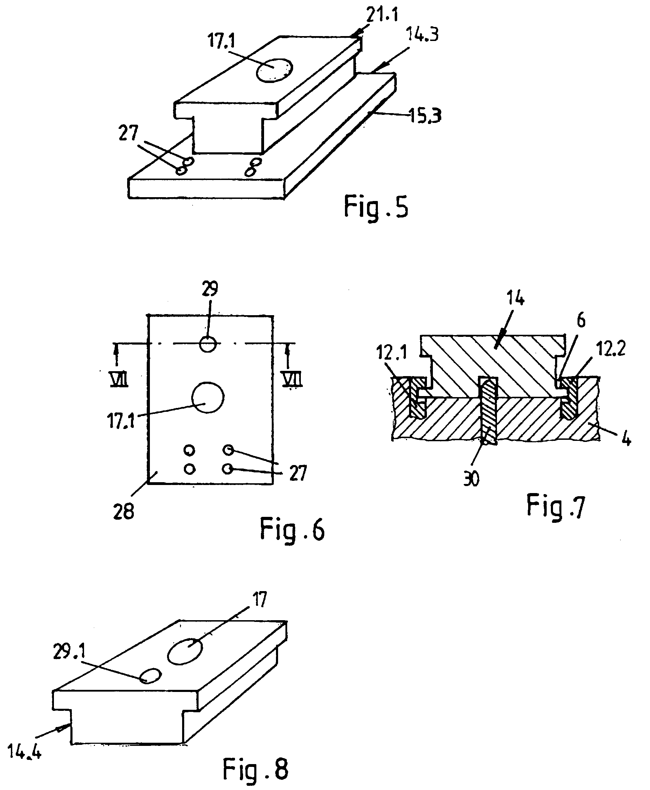

Die Halterung von Unterwerkzeug und Oberwerkzeug in dem Kanal 6 bzw. der Rinne 11 geschieht so, wie dies in der CH-PS 627 965 beschrieben ist. Dabei erfolgt die Festlegung von Ober- und Unterwerkzeug über eingeschnittene Bolzen bzw Zugancker 12.1 bzw. 12.2, die lediglich in Figur 7 angedeutet sind.

Für die Steuerung der gesamten Vorrichtung R zum Bearbeiten von Werkstücken ist eine separate Steuereinheit 13 vorgesehen.

Erfindungsgemäss ist zwischen das Ober- und/oder Unterwerkzeug und die Aufspannplatte 4 bzw. 8 gemäss Figur 2 ein Adapter 14.1 bzw. 14.2 dazwischengeschaltet. Der Adapter 14 weist dabei zumindest eine Platte 15 auf, deren Breite b (siehe Figur 3) in etwa der Breite b₁ des hinterschnittenen Bereiches des Kanals 6 bzw. der Rinne 11 entspricht. Hierdurch kann diese Platte 15 in den Kanal 6 bzw. die Rinne 11 eingeschoben werden und wird dort mittels der Bolzen 12 verspannt, wie dies in der CH-PS 627 965 beschrieben ist.

In Figur 2 ist erkennbar, dass für das Oberwerkzeug an die Platte 15.1 ein Block 16 anschliesst, der in den Figuren 3 und 4 näher gezeigt ist. Dieser Block 16 weist eine Bohrung 17 zur Aufnahme des Oberwerkzeuges 18 auf. Eine Seitenbohrung 19, welche bevorzugt mit einem Innengewinde belegt ist, erlaubt das Einsetzen von beispielsweise einer Madenschraube, welche auf das Oberwerkzeug 18 trifft und dieses festlegt.

Der Adapter 14.2 für das Unterwerkzeug 20 weist ebenfalls eine Platte 15.2 auf, welcher ähnlich der Platte 15.1 geformt ist und deren Breite so ausgelegt ist, dass sie in den Kanal 6 eingeschoben werden kann. Auf dieser Platte 15.1 sitzt ein T-förmiger Block 21 auf, der auf seiner Oberseite 22 das Unterwerkzeug 20 trägt. Dieses ist über Schrauben 23.1 und 23.2 auf der Oberseite 22 festgelegt.

In den Figuren 2 und 3 ist erkennbar, dass auf der Oberseite 22 des T-förmigen Blocks 21 eine Mehrzahl von Bohrungen 24 bzw. 25 vorgesehen sein können, welche der Festlegung unterschiedlichster Unterwerkzeuge 20 dienen. Selbstverständlich ist dies nur als Beispiel gedacht. Hier sind viele unterschiedliche Bohrungen sowohl in der Anordnung als auch in der Größe möglich, so dass möglichst eine Vielzahl von Unterwerkzeugen 20 gehalten werden können. Das gleiche gilt selbstverständlich auch für den Adapter 14.1 für das Oberwerkzeug 18, der ebenfalls eine Vielzahl von Bohrungen besitzen kann.

Bevorzugt wird der Rest des Kanals 6, der nicht von dem Adapter 14.2 belegt ist, durch einen Deckel 26 verschlossen.

In Figur 5 ist ein Adapter 14.3 für ein Unterwerkzeug gezeigt, welcher demjenigen nach den Figuren 2 bis 4 sehr ähnelt. Auch hier ist auf einer Platte 15.3 ein T-förmiger Block 21.1 aufgesetzt, der allerdings in diesem Fall eine Bohrung 17.1 zur Aufnahme des Unterwerkzeuges aufweist. Ferner sind in die Platte 15.3 Bohrungen 27 zur Halterung des Deckels 26 eingeformt.

Bei einem Blick auf eine Unterfläche 28 der Platte 15.3 gemäß Figur 6 ist erkennbar, daß die Bohrung 17.1 auch die Unterfläche 28 durchsetzt. Ferner ist der Bohrung 17.1 eine Zentrierbohrung 29 zugeordnet, welche der Aufnahme eines Zentrierstifes 30 dient. Dieser Zentrierstift 30 kann beispielsweise federgelagert oder auf sonstige Art und Weise verschiebbar in der Aufspannplatte 4 (siehe Figur 7) im Bereich des Kanals 6 angeordnet sein.

In Figur 8 ist ein weiterer Adapter 14.4 für ein Oberwerkzeug gezeigt. Dieser ist querschnittlich T-förmig ausgestaltet und weist neben der Bohrung 17 auch eine weitere Zentrierbohrung 29.1 auf, die allerdings vor der Bohrung 17 liegt. Bei dem Adapter 14.3 gemäss Figur 6 liegt die Zentrierbohrung 29 hinter der Bohrung 17.1. Dies bedeutet, dass die beiden Adapter nicht verwechselt werden können, da durch ein Nichteinfahren des Zentrierstiftes 30 in die jeweilige Zentrierbohrung 29 bzw. 29.1 ein falsches Einsetzen des Adapters in die Rinne 9 bzw. den Kanal 6 festgestellt wird.

## Patentansprüche

1. Vorrichtung zum Bearbeiten von Werkstücken mit einem Werkzeug (5, 18, 20), das an einer Aufspannplatte (4, 8) festgelegt ist,
dadurch gekennzeichnet,
dass zwischen der Aufspannplatte (4, 8) und dem Werkzeug (5, 18, 20) ein Adapter (14) angeordnet ist.

2. Vorrichtung nach Anspruch 1, dadurch gekennzeichnet, dass der Adapter (14) zumindest eine Platte (15) aufweist, deren Breite (b) einer Breite (b₁) eines Kanals (6) bzw. einer Rinne (11) in der Aufspannplatte (4, 8) entspricht.

3. Vorrichtung nach Anspruch 2, dadurch gekennzeichnet, dass der Platte (15) Klemmelemente bzw. Zugancker (12) in der Aufspannplatte (4, 8) zugeordnet sind.

4. Vorrichtung nach einem der Ansprüche 1 bis 3, dadurch gekennzeichnet, dass der Adapter (14) Bohrungen (24, 25) zum Festlegen des Werkzeuges (5) aufweist.

5. Vorrichtung nach wenigstens einem der Ansprüche 1 bis 4, dadurch gekennzeichnet, dass der Adapter (14) zumindest eine Bohrung (29) aufweist, welche mit einem Zentrierstift (30) in der Aufspannplatte (4, 8) zusammenwirkt.

6. Vorrichtung nach wenigstens einem der Ansprüche 1 bis 5, dadurch gekennzeichnet, dass das Werkzeug (5) aus einem Ober- und einem Unterwerkzeug (18, 20) besteht, wobei jedes an einem Adapter (14.1, 14.2) angeordnet ist.
